# EUROPEAN PATENT APPLICATION

(11) **EP 1 489 769 A1**
(43) Date of publication of application: **22.12.2004**
(21) Application number: 03745001.2
(22) Date of filing: 20.03.2003
(51) Int. Cl.: H04L 1/00, H04L 1/16, H04L 27/32

(54) **BASE STATION APPARATUS AND PACKET TRANSMISSION METHOD**

(30) Priority: 22.03.2002 JP 2002081271
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: PCT/JP2003/003396
(87) International publication number: WO 2003/081834

(57) **Abstract**

A service kind determining section 152 determines a service class from service information included in the header of transmission data of each communication terminal apparatus. A maximum retransmission number setting section 153 sets the maximum number of retransmissions from an allowable delay time allowed in each service class. An MCS selecting section 154 decides a communication terminal apparatus that transmits a packet based on a report value from each communication terminal apparatus, and outputs information indicating the destination apparatus to a transmission queue 156 with reference to a determination result of a user determining section 151. Moreover, the MCS selecting section 154 selects a suitable modulation system and a coding rate from the MCS selection table 154 based on the maximum number of retransmissions of the destination apparatus and the report value, and outputs information indicating the selected modulation system and coding rate to a multiplexing section 157, an error correction coding section 158 and a modulating section 159. This makes it possible to decide an optimal combination of the modulation system and the error correction coding system.

## Description

### Technical Field

The present invention relates to a base station apparatus and packet transmission method that performs downlink high-speed packet transmission.

### Background Art

There is developed a high-speed packet transmission system (HSDPA and the like) in which a plurality of communication terminal apparatuses shares a high-speed and large-capacity downchannel and performs high-speed packet transmission. In this type of the transmission system, a scheduling technique and an adaptive modulation technique are used in order to improve transmission efficiency.

The scheduling technique is a technique in which the base station apparatus assigns a communication terminal apparatus as a downlink packet destination. As a conventional typical scheduling technique, there are used a maximum C/I (Carrier to Interference) method in which a state of a propagation path of a downlink is observed and the respective communication terminal apparatuses are assigned preferentially in decreasing order of the user having a good quality and a round robin method in which assignment is sequentially made for each user.

Moreover, the adaptive modulation technique is a technique that adaptively decides a modulation system or an error correction coding system according to the state of the propagation path of the communication terminal apparatus that performs packet transmission. As a conventional adaptive modulation technique, there are used (a) a method in which a communication terminal apparatus estimates or predicts the quality of downlink, sets optimal transport formats (modulation system, error correction coding system) and reports them to a base station apparatus, (b) a method in which a communication terminal apparatus estimates or predicts the quality of downlink and reports it to a base station apparatus and the base station apparatus sets optimal transport formats (modulation system, error correction coding system) based on the reported value, and (c) a method in which a base station apparatus sets optimal transport formats (modulation system, error correction coding system) without receiving a report from a communication terminal apparatus.

The base station apparatus error correction codes the packet fixed by the scheduling and thereafter transmits it to the communication terminal apparatus assigned by the scheduling. Moreover, when the high-speed packet sent from the base station apparatus does not meet a predetermined reception quality and cannot be demodulated correctly by the communication terminal apparatus, the base station apparatus retransmits the packet.

Here, data of different service classes such as voice data, Web data, and the like is multiplexed into the packet. Then, an allowable delay time is different for each service class. For example, voice data has a short allowable delay time and Web data has a long allowable delay time.

Accordingly, since the allowable delay time is different for each service class, there is a case in which the modulation system and the error correction system that are to be selected are different even under the same radio channel quality condition.

However, the scheduling technique that decides the optimal combination of the modulation system and error correction coding system based on the service class of transmission packet has not yet been disclosed.

### Disclosure of Invention

An object of the present invention is to provide a base station apparatus and packet transmission method that is capable of deciding the optimal combination of a modulation system and an error correction coding system based on a service class of a transmission packet.

The above object can be attained by considering the maximum number of transmissions to which an allowable delay time for each service class is reflected at the time of selecting the optimal combination of the modulation system and the error correction coding system in the case where data of different service classes is transmitted.

### Brief Description of Drawings

FIG. 1 is a block diagram illustrating a configuration of a base station apparatus according to Embodiment 1 of the present invention;
FIG. 2A is a view illustrating one example of the contents stored in an MCS selection table of the base station apparatus according to Embodiment 1 of the present invention;
FIG. 2B is a view illustrating one example of the contents stored in an MCS selection table of the base station apparatus according to Embodiment 1 of the present invention;
FIG. 2C is a view illustrating one example of the contents stored in an MCS selection table of the base station apparatus according to Embodiment 1 of the present invention;
FIG. 3 is a block diagram illustrating a configuration of a base station apparatus according to Embodiment 2 of the present invention;
FIG. 4A is a view illustrating one example of the contents stored in an MCS selection table of the base station apparatus according to Embodiment 2 of the present invention;
FIG. 4B is a view illustrating one example of the contents stored in an MCS selection table of the base station apparatus according to Embodiment 2 of the present invention; and
FIG. 4C is a view illustrating one example of the contents stored in an MCS selection table of the base station apparatus according to Embodiment 2 of the present invention.

### Best Mode for Carrying Out the Invention

The following will explain embodiments of the present invention with reference to the drawings.

### (Embodiment 1)

Embodiment 1 of the present invention will explain a case in which the combination of a modulation system and an error correction coding system suitable for each service class is decided in " (b) a method in which the communication terminal apparatus estimates or predicts the quality of downlink and reports it to the base station apparatus and the base station apparatus sets optimal transport formats (modulation system, error correction coding system) based on the reported value." Moreover, in this embodiment, it is assumed that radio resource is assigned by the maximum C/I method.

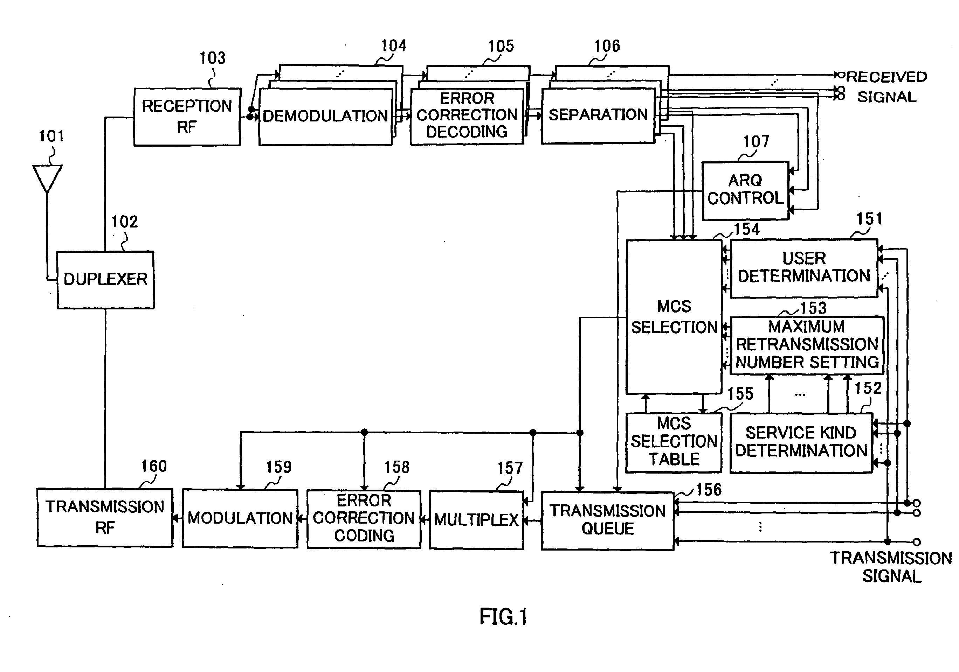

FIG. 1 is a block diagram illustrating a configuration of a base station apparatus according to Embodiment 1 of the present invention. In FIG. 1, the base station apparatus includes an antenna 101, a duplexer 102, a reception RF section 103, a demodulating section 104, an error correction decoding section 105, a separating section 106, and an ARQ control section 107. Moreover, the base station apparatus includes a user determining section 151, a service kind determining section 152, a maximum retransmission number setting section 153, an MCS (Modulation Coding Scheme: combination of a modulation system and an error correction code) selecting section 154, an MCS selection table 155, a transmission queue 156, a multiplexing section 157, an error correction coding section 158, a modulating section 159, and a transmission RF section 160.

The duplexer 102 outputs a signal, which was received by the antenna 101, to the reception RF section 103. Moreover, the duplexer 102 transmits a signal as a radio signal, which was output from the transmission RF section 160, from the antenna 101.

The reception RF section 103 converts a radio frequency received signal, which was output from the duplexer 102, to a baseband digital signal, and outputs it to the demodulating section 104.

The demodulating section 104 is prepared to correspond to the number of communication terminal apparatuses, which perform radio communications, and performs demodulation processing to a received baseband signal, and outputs it to the error correction decoding section 105. The error correction decoding section 105 is prepared to correspond to the number of communication terminal apparatuses, which perform radio communications, and performs decode processing for an error correction such as Viterbi decoding and the like to a demodulated signal, and outputs it to the separating section 106.

The separating section 106 is prepared to correspond to the number of communication terminal apparatuses, which perform radio communications, and separates an ACK signal or an NACK signal from a decoded signal, and outputs it to the ARQ control section 107. Moreover, the separating section 106 separates a report value from the decoded signal and outputs it to the MCS selection section 154. Additionally, the ACK signal is a signal indicating that the high-speed packet transmitted from the base station apparatus can be correctly demodulated by the communication terminal apparatus. While, the NACK signal is a signal indicating that the high-speed packet transmitted from the base station apparatus cannot be correctly demodulated by the communication terminal apparatus. Moreover, the report value measured by the communication terminal apparatus is a value indicating a state of a propagation path between each relevant communication terminal apparatus and the base station apparatus, and in the case of in the maximum C/I method, this indicates a CIR (Carrier to Interference Ratio).

The ARQ control section 107 instructs the MCS selecting section 154 and the transmission queue 156 to transmit new data when the ACK signal is input. While, the ARQ control section 107 instructs the MCS selecting section 154 and the transmission queue 156 to retransmit previously transmitted data when the NACK signal is input.

The user determining section 151 determines as to which transmission terminal apparatus the relevant transmission data relates based on user information included in a header of transmission data of each communication terminal apparatus, and outputs a determination result to the MCS selecting section 154.

The service kind determining section 152 determines a service class from service information included in the header of transmission data of each communication terminal apparatus, and outputs a determination result to the maximum retransmission number setting section 153 in association with the communication terminal apparatus. Additionally, the service class is described in an IP header of a frame format. For example, IPv4 is described in a filed of "kind of service" and IPv6 is described in a field of "traffic class."

The maximum retransmission number setting section 153 divides an allowable delay time allowed in each service class by a round trip time (RTT) of a radio signal between the base station apparatus and each communication terminal apparatus, and converts the resultant value to an integer to set the maximum number of retransmissions, and outputs it to the MCS selecting section 154.

The MCS selecting section 154 decides a communication terminal apparatus (hereinafter referred to as "destination apparatus") that transmits the packet based on the report value from each communication terminal apparatus, and outputs information, which indicates the destination apparatus, to the transmission queue 156 with reference to the determination result of the user determining section 151. For example, in the case of the maximum C/I method, the MCS selecting section 154 decides a communication terminal apparatus with the maximum CIR as a destination apparatus. Moreover, the MCS selecting section 154 selects a suitable modulation system and a coding rate from the MCS selection table 155 based on the maximum number of retransmissions of the destination apparatus and the report value, and outputs information, which indicates the selected modulation system and the coding rate, to the multiplexing section 157, the error correction coding section 158 and the modulating section 159. Additionally, the contents stored in the MCS selection table 155 and the method of deciding the coding rate and modulation system of the MCS selecting section 154 will be specifically explained later.

The transmission queue 156 selects data relating to the destination apparatus instructed by the MCS selecting section 154. At this time, when receiving an instruction on transmission of new data from the ARQ control section 107, the transmission queue 156 deletes stored data, outputs new data to the multiplexing section 157, and stores it. While, when receiving an instruction on retransmission of data from the ARQ control section 107, the transmission queue 156 outputs stored data to the multiplexing section 157.

The multiplexing section 157 multiplexes information, which indicates the coding rate and modulation system output from the MCS selecting section 154, to data output from the transmission queue 156. The error correction coding section 158 error correction codes an output signal of the multiplexing section 157 by the coding rate system selected by the MCS selecting section 154 and outputs it to the modulating section 159. The modulating section 159 modulates an output signal of the error correction coding section 158 by the modulation system selected by the MCS selecting section 154 and outputs it to the transmission RF section 160.

The transmission RF section 160 converts a baseband digital signal, which was output from the modulating section 159, to a radio frequency received signal and outputs it to the duplexer 102.

Next, the contents stored in the MCS selection table 155 and the method of deciding the coding rate and modulation system of the MCS selecting section 154 will be specifically explained.

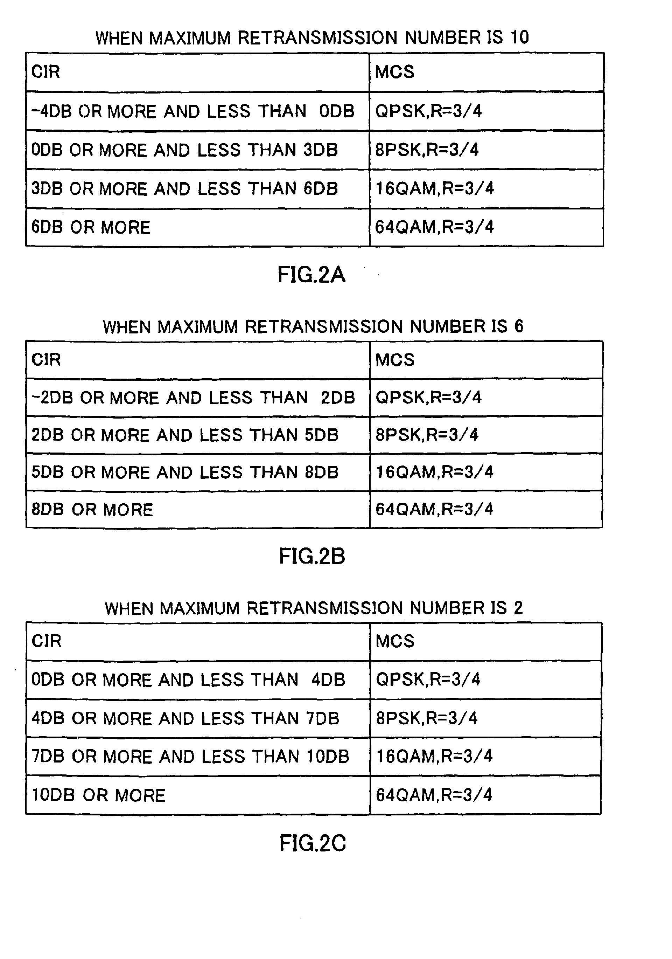

FIGS. 2A, 2B and 2C are views each illustrating an example of the contents stored in the MCS selection table 155. As illustrated in FIGS. 2A, 2B and 2C, the MCS selection table 155 stores a corresponding relationship between CIR and MCS every time when the maximum number of retransmissions is reached. FIG. 2A shows a corresponding relationship between CIR and MCS when the maximum number of retransmissions is 10 and FIG. 2B shows it when the maximum number of retransmissions is 6, and FIG. 2C shows it when the maximum number of retransmissions is 2. In addition, in FIGS. 2A, 2B, and 2C, each of QPSK, 8PSK, 16QAM, and 64QAM show a modulation system, and R indicates a coding rate.

Additionally, in general, there is such a relationship in which the higher CIR is, the more M-ary modulation number can be increased, and the larger the maximum number of retransmissions is, the more M-ary modulation umber can be increased.

For example, when the maximum CIR is "7dB" and the maximum number of retransmissions is "7" of the corresponding communication terminal apparatus in the report values from the respective communication terminal apparatuses, the MCS selecting section 154 selects "16QAM", R=3/4", which is MCS when CIR is "7dB" in the MCS selection table 155 of FIG. 2B, and outputs information, which indicates the selected modulation system and coding rate, to the multiplexing section 157, the error correction coding section 158, and the modulating section 159.

In the case where data of different service classes is transmitted in this way, the maximum number of retransmissions of the destination apparatus and the report value are referenced, thereby making it possible to attain an increase in accuracy of selection of an optimal packet modulation system and a coding rate, a reduction in the number of data retransmissions, and improvement in transmission efficiency.

### (Embodiment 2)

Embodiment 2 of the present invention will explain a case in which the combination of a modulation system and an error correction coding system that are suitable for each service class is decided in "(c) a method in which a base station apparatus sets optimal transport formats (modulation system, error correction coding system) without receiving a report from a communication terminal apparatus."

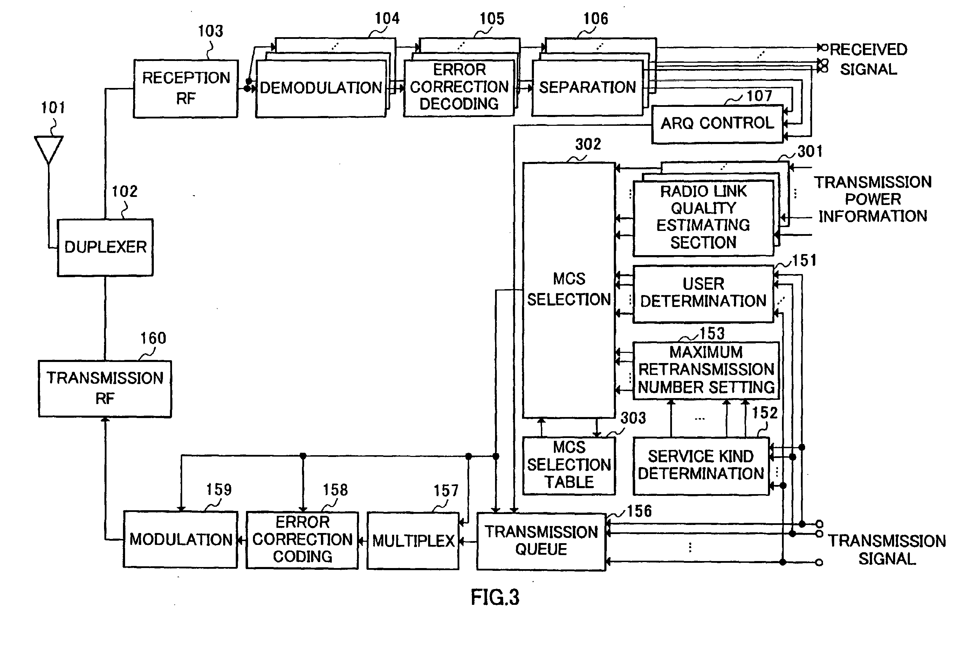

FIG. 3 is a block diagram illustrating a configuration of a base station apparatus according to Embodiment 2 of the present invention. In addition, the parts in the base station apparatus in FIG. 3 identical to those in FIG. 1 are assigned the same reference numerals as in FIG. 1 and their detailed explanations are omitted.

The base station apparatus in FIG. 3 adopts a configuration in which a radio rink quality estimating section 301 is added as compared with FIG. 1. Moreover, in the base station apparatus in FIG. 3, the function of an MCS selecting section 302 is different from that of the MCS selecting section 154, and the function of an MCS selection table 303 is different from that of the MCS selection table 155 in FIG. 1.

Here, when transmission power control is performed to a closed loop in a downlink, the communication terminal apparatus measures the reception quality of the downlink (normally, SIR) and compares it with a target value (target SIR) that is predetermined as its reception quality. As a result, the communication terminal apparatus transmits a command, which decreases transmission power, to the base station apparatus when the measured reception quality is high, and transmits a command, which increases transmission power, to the base station apparatus when the measured reception quality is low. Accordingly, transmission power of a signal, which is to be transmitted to each communication terminal from the base station apparatus, is used as an index showing reception quality in the communication terminal apparatus.

The radio rink quality estimating section 301 estimates quality of the radio link of each communication terminal based on transmission power information showing power of a signal, which is to be transmitted to each communication terminal apparatus, and outputs it to the MCS selecting section 302.

The MCS selecting section 302 decides a destination apparatus based on the quality of the radio link of each communication terminal apparatus and outputs information, which indicates the destination apparatus, to the transmission queue 156. Moreover, the MCS selecting section 302 selects a suitable modulation scheme and a coding rate from the MCS selection table 303 based on the maximum number of retransmissions and the quality of the radio link of the destination apparatus, and outputs information indicating the selected modulation scheme and coding rate to the multiplexing section 157, the error correction coding section 158, and the modulating section 159.

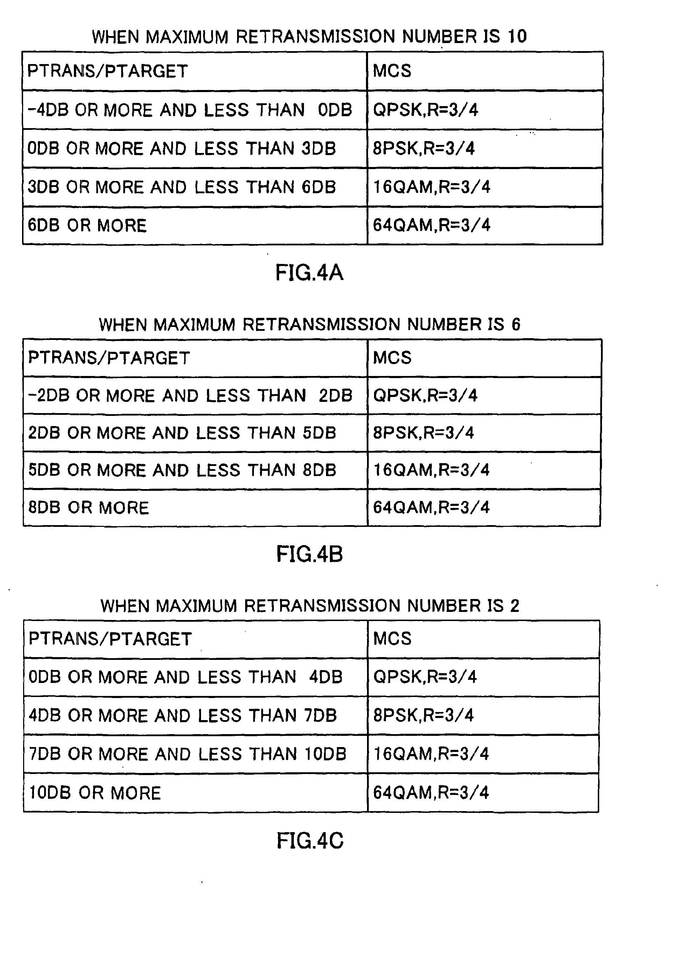

In addition, the MCS selection table 303 stores a corresponding relationship between Ptrans/Ptarget and MCS every time when the maximum number of retransmissions is reached as illustrated in FIGS.4A, 4B and 4C. FIG. 4A shows a corresponding relationship between Ptrans/Ptarget and MCS when the maximum number of retransmissions is 10 and FIG. 4B shows it when the maximum number of retransmissions is 6, and FIG. 4C shows it when the maximum number of retransmissions is 2. Here, Ptrans shows transmission power and Ptarget shows reference power.

In the case where data of different service classes is transmitted in this way, the maximum number of retransmissions of the destination apparatus and the quality of radio link are referenced, thereby making it possible to attain an increase in accuracy of selection of an optimal packet modulation system and a coding rate, a reduction in the number of data retransmissions, and improvement in transmission efficiency.

In addition, in "(a) a method in which a communication terminal apparatus estimates or predicts the quality of downlink, sets optimal transport formats (modulation system, error correction coding system) and reports them to a base station apparatus", it is considered that the base station apparatus transmits information, which indicates the maximum number of retransmissions, to the communication terminal apparatus and the communication terminal apparatus selects a modulation system and a coding rate using the quality of radio rink and the maximum number of retransmissions and reports them to the base station apparatus. However, in this case, since the base station apparatus must report data to the communication terminal apparatus every time when data to be transmitted reaches, it is difficult to select an optimal modulation system and a coding rate in various service classes.

As is obvious from the above explanation, according to the present invention, the maximum number of transmissions to which an allowable delay time for each service class is reflected is considered, thereby making it possible to accurately select an optimal packet modulation system and a coding rate. This enables to reduce the number of data retransmissions and improve transmission efficiency.

This application is based on the Japanese Patent Application No. 2002-081271 filed on March 22, 2002, entire content of which is expressly incorporated by reference herein.

### Industrial Applicability

The present invention is suitable for use in a base station apparatus of a radio communication system that performs downlink high-speed packet transmission.

## Claims

1. A base station apparatus comprising:
separating means for separating a report value indicating a state of a propagation path from a received signal;
maximum retransmission number setting means for setting the maximum number of retransmissions based on a service class of a communication terminal apparatus; and
destination deciding means for deciding a communication terminal apparatus as a packet destination based on the report value and deciding a coding rate and a modulation system based on the report value and the maximum number of retransmissions.

2. The base station apparatus according to claim 1, wherein said destination deciding means selects a suitable modulation system and a coding rate from a table storing a corresponding relationship among a carrier to interference ratio, a modulation system, and a coding rate every time when the maximum number of retransmissions is reached.

3. A base station apparatus comprising:
radio link quality estimating means for estimating quality of a radio link of each communication terminal apparatus based on transmission power information indicating power of a signal to be transmitted to the communication terminal apparatus;
maximum retransmission number setting means for setting the maximum number of retransmissions based on a service class of a communication terminal apparatus; and
destination deciding means for deciding a communication terminal apparatus as a packet destination based on the quality of the radio link and deciding a coding rate and a modulation system based on the quality of the radio link and the maximum number of retransmissions.

4. The base station apparatus according to claim 3, wherein said destination deciding means selects a suitable modulation system and a coding rate from a table storing a corresponding relationship among a carrier to interference ratio, a modulation system, and a coding rate every time when the maximum number of retransmissions is reached.

5. The base station apparatus according to claim 1, wherein said maximum retransmission number setting means divides an allowable delay time allowed in each service class by a round trip time of a radio signal between the base station apparatus and each communication terminal apparatus and converts the resultant value to an integer to set a maximum number of retransmissions.

6. A packet transmission method comprising the steps of:
deciding a communication terminal apparatus as a packet destination based on the quality of a report value indicating a state of a propagation path; and
deciding a coding rate and a modulation system based on the maximum number of retransmissions of a service class of the decided communication terminal apparatus and the report value.

7. A packet transmission method comprising the steps of:
deciding a communication terminal apparatus as a packet destination based on the quality of a radio link; and
deciding a packet coding rate and a modulation system based on the maximum number of retransmissions of a service class of the decided communication terminal apparatus and the quality of the radio link.
